# FASCICULE DE BREVET EUROPEEN

(11) **EP 3 973 172 B1**
(45) Date de publication et mention de la délivrance du brevet: **09.08.2023**
(21) Numéro de dépôt: 20737252.5
(22) Date de dépôt: 19.05.2020
(51) Int. Cl.: F02K 9/97, F02K 9/84, F02K 9/60, B64G 1/40, F16F 15/073, F16F 1/18

(54) **SYSTÈME D'AMORTISSEMENT NON LINÉAIRE PAR LAMELLE POUR MOTEUR DE LANCEUR SPATIAL**
NICHT-LINEARES DÄMPFUNGSSYSTEM UMFASSEND BLATTFEDERN FÜR EINEN RAKETENANTRIEB
NON LINEAR DAMPING SYSTEM COMPRISING LEAF SPRINGS FOR A ROCKET ENGINE

(30) Priorité: 21.05.2019 FR 1905294
(43) Date de publication de la demande: 30.03.2022
(73) Titulaire: ArianeGroup SAS, 78130 Les Mureaux (FR)
(72) Inventeur: PYRE, Alain, 27207 VERNON CEDEX (FR); DAVID, Noël, 27207 VERNON CEDEX (FR)
(74) Mandataire: Cabinet Beau de Loménie
(86) Numéro de dépôt international: PCT/FR2020/050831
(87) Numéro de publication internationale: WO 2020/234540

(56) Documents cités:
- RU-C1- 2 429 371
- US-A- 3 279 193
- US-A- 5 156 337
- US-A1- 2011 302 905

## Description

### Domaine Technique

Le présent exposé concerne le domaine des lanceurs spatiaux, et concerne plus précisément les moteurs de tels lanceurs et la structure entourant la tuyère de ces moteurs.

### Technique antérieure

Les lanceurs spatiaux sont soumis à des contraintes importantes en termes de masse, que l'on cherche à minimiser afin de réduire le coût de chaque lancement. Au vu de ces problématiques, certains moteurs de lanceurs doivent pouvoir fonctionner en présence de couplages dynamiques significatifs entre plusieurs composants. On comprend aisément que de tels couplages dynamiques peuvent aboutir, par manque d'amortissement, à des déplacements ayant des amplitudes inacceptables et pouvant générer localement des contraintes trop élevées.

Il en ressort un besoin de limitation de l'amplitude des déplacements des modes dynamiques couplés des différents composants, tout en minimisant la masse des moyens employés pour réaliser cette fonction. En particulier, la plaque s'étendant radialement autour de la tuyère ou de la chambre de combustion pose une problématique importante en termes d'amplitudes de déplacement. Cette plaque a notamment pour fonction d'isoler le volume interne du lanceur comprenant le moteur du milieu extérieur. Du fait des mouvements possibles du moteur et de la tuyère, la plaque présente nécessairement un contour externe libre, ce qui peut donc entrainer des déplacements importants.

L'ajout de bielles formant des supports pour la plaque a été envisagé, mais n'est pas acceptable à la fois en termes de masse, et également en termes de contraintes générées du fait de la dilatation thermique des bielles, qui du fait notamment des différents matériaux employés pour la réalisation des différents composants du moteur, entrainent des efforts locaux extrêmement important.

Le document US3279193A divulgue un lanceur spatial selon le préambule de la revendication 1.

### Exposé de l'invention

Le présent exposé vise ainsi à répondre aux problématiques exposées précédemment.

A cet effet, le présent exposé concerne un lanceur spatial comprenant un corps de lanceur, un moteur comprenant une chambre de combustion débouchant sur une tuyère présentant un axe principal, le moteur étant fixé au corps de lanceur au moyen d'un cardan, la tuyère étant munie d'une plaque s'étendant radialement autour de la tuyère et isolant un volume interne de l'engin spatial d'un milieu externe, la plaque délimitant un segment interne du moteur et un segment externe du moteur, le segment interne du moteur comprenant la chambre de combustion et étant isolé du milieu externe par la plaque, la plaque présentant une face interne et une face externe positionnées respectivement dans le volume interne et dans le milieu externe, caractérisé en ce qu'il comprend en outre une pluralité d'éléments d'amortissement positionnés sur la face interne de la plaque, chaque élément d'amortissement comprenant une lamelle ressort parallèle à la face interne de la plaque.

Selon un exemple, tout ou partie desdits éléments d'amortissement comprend au moins deux lamelles ressort superposées. Pour un tel exemple, pour chaque élément d'amortissement comprenant au moins deux lamelles ressort superposées, lesdites lamelles ressort sont alors typiquement de dimensions distinctes.

Selon un exemple, la plaque est munie d'une pluralité d'éléments d'amortissement comprenant chacun une lamelle métallique de forme rectangulaire présentant chacune une dimension longitudinale et une dimension transversale perpendiculaires, la dimension longitudinale étant supérieure à la dimension transversale, la plaque comprenant un premier ensemble d'éléments d'amortissement positionnés de manière à ce que leur dimension longitudinale s'étende radialement par rapport à l'axe principal de la tuyère, et un second ensemble d'éléments d'amortissement positionnés de manière à ce que leur dimension transversale s'étende radialement par rapport à l'axe principal de la tuyère.

Les éléments d'amortissement du premier ensemble d'éléments d'amortissement sont alors typiquement chacun fixés à la plaque par une extrémité de chaque élément d'amortissement selon la dimension longitudinale la plus proche de l'axe principale de la tuyère.

Selon un exemple, les éléments d'amortissement du second ensemble d'éléments d'amortissement sont chacun fixés à la plaque par une portion médiane de chaque élément d'amortissement.

Ladite portion médiane est alors typiquement centrée sur le milieu de chaque élément d'amortissement selon sa dimension longitudinale.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures listées ci-après.
[Fig. 1] La figure 1 illustre schématiquement un exemple de moteur de lanceur selon un aspect de l'invention.
[Fig. 2] La figure 2 est une autre vue schématique d'un moteur de lanceur selon un aspect de l'invention.
[Fig. 3] La figure 3 est un schéma illustrant le comportement de la plaque sans l'invention.
[Fig. 4] La figure 4 est un schéma illustrant l'effet de l'invention.
[Fig. 5] La figure 5 est un schéma illustrant le comportement de la plaque sans l'invention.
[Fig. 6] La figure 6 est un schéma illustrant le positionnement de l'invention sur la plaque.
[Fig. 7] La figure 7 est un schéma illustrant l'effet de l'invention.

Sur l'ensemble des figures, les éléments en commun sont repérés par des références numériques identiques.

### Description des modes de réalisation

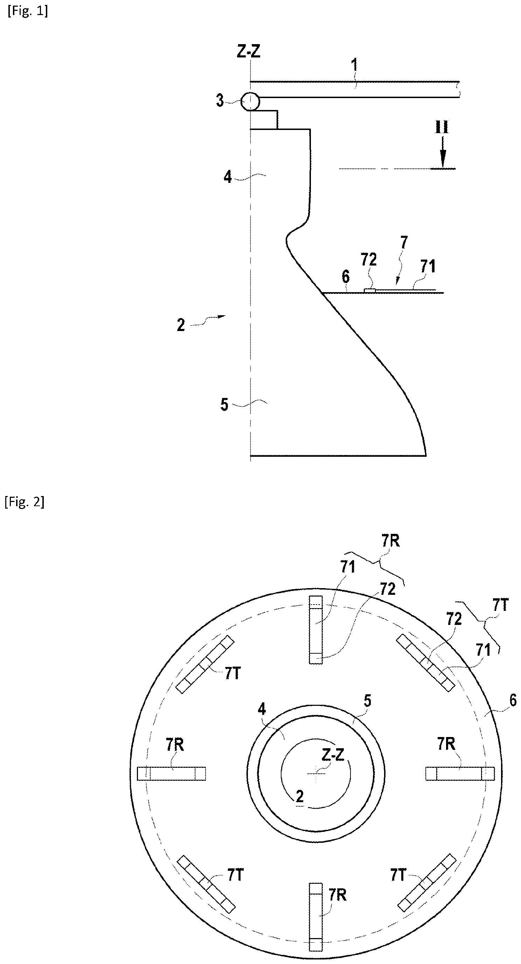

Les figures 1 et 2 sont deux vues illustrant schématiquement un moteur de lanceur selon un aspect de l'invention.

On représente sur ces figures un corps de lanceur 1, typiquement une fusée, auquel est fixé un moteur 2 au moyen d'un cardan 3, permettant une modification de l'orientation du moteur 2 par rapport au corps de lanceur 1. Le moteur 2 est composé notamment d'une chambre de combustion 4 et d'une tuyère 5, aussi appelée divergent.

Le moteur 2 s'étend selon une direction principale, définie par un axe principal Z-Z, correspondant typiquement à un axe vertical étant entendu que cette orientation peut être modifiée. De manière générale, on peut définir l'axe principal Z-Z du moteur 2 comme étant l'axe de révolution de la tuyère 5, cette dernière présentant une symétrie de révolution.

Une plaque 6 s'étend autour de la tuyère 5 ou de la chambre de combustion 4, typiquement selon une direction radiale par rapport à l'axe principal Z-Z. La plaque 6 délimite un milieu interne et un milieu externe, le milieu interne étant isolé du milieu externe, ce dernier étant soumis à la pression ambiante. On définit ainsi pour le moteur 2 un segment interne disposé dans le milieu interne, et un segment externe disposé dans le milieu externe. Le segment interne comprend notamment la chambre de combustion 4 et une partie proximale de la tuyère 5, adjacente à la chambre de combustion 4, tandis que le segment externe comprend une partie distale de la tuyère 5, qui est la partie de la tuyère 5 la plus éloignée de la chambre de combustion 4, formant une extrémité libre de la tuyère 5.

La plaque 6 présente une forme générale d'anneau, s'étendant entre un diamètre interne Di correspondant typiquement au diamètre externe de la tuyère 5 à la section considérée selon la direction principale, et un diamètre externe Dx correspondant à la dimension maximale de la plaque 6. La plaque 6 est typiquement munie d'un ensemble de nervures et de renforts structurels permettant d'assurer sa tenue mécanique notamment par rapport aux différences de pression pouvant intervenir entre le milieu interne et le milieu externe, et comprend typiquement des perçages pour permettre le passage de conduits d'échappement des gaz. On définit ainsi pour la plaque 6 une face interne et une face externe, qui se trouvent respectivement dans le milieu interne et dans le milieu externe.

La plaque 6 est reliée au corps de lanceur 1 typiquement au moyen d'une membrane souple, permettant d'assurer la séparation entre le milieu interne et le milieu externe, cette membrane souple pouvant se déformer, ce qui autorise les mouvements du moteur 2. La membrane souple est typiquement solidarisée à la périphérie externe de la plaque 6.

Comme indiqué précédemment, la plaque 6 est soumise à des vibrations émanant notamment du moteur 2, ce qui peut entrainer des déplacements ayant une amplitude importante notamment lorsque ces vibrations correspondent à des modes propres du système.

Afin d'atténuer ces déplacements, le système proposé comprend des éléments d'amortissement 7 positionnés sur la plaque 6, typiquement sur la face interne de la plaque 6.

Les éléments d'amortissement 7 comprennent chacun au moins une lamelle ressort 71 fixée à la plaque 6 via une fixation 72. Les lamelles ressort présentent typiquement une forme de rectangle s'étendant selon une direction principale, définissant une dimension longitudinale Lo (ou longueur pour une section rectangulaire) selon ladite direction principale, une dimension transversale Lt (ou largeur pour une section rectangulaire) selon la normale à ladite direction principale, et une épaisseur e. La dimension longitudinale Lo forme la longueur de la forme de rectangle, et est supérieure à la dimension transversale Lt. L'épaisseur e est typiquement faible, par exemple inférieure à 0,1 Lt ou encore inférieure à 0,05 Lt.

Les éléments d'amortissement 7 peuvent présenter plusieurs lamelles ressort 71 superposées. Dans ce cas, les lamelles ressort 71 d'un même élément d'amortissement 7 peuvent avoir des dimensions distinctes, par exemple une dimension longitudinale Lo distincte.

A titre d'exemple, si on considère un élément d'amortissement comprenant deux lamelles ressort 71 superposées, on définit alors une lamelle ressort interne et une lamelle ressort externe, la lamelle ressort interne étant positionnée entre la plaque 6 et la lamelle ressort externe. La lamelle ressort interne, c'est-à-dire la plus proche de la plaque 6 peut présenter une dimension longitudinale Lo1, une dimension transversale Lt1, et une épaisseur e1. La lamelle ressort externe, c'est-à-dire la plus éloignée de la plaque 6 présente quant à elle une dimension longitudinale Lo2 < Lo1, une dimension transversale Lt2 = Lt1, et une épaisseur e2 = e2.

On comprend que les différents éléments d'amortissement 7 peuvent présenter un nombre variable de lamelles ressort, par exemple, 1, 2, 3, 4 ou 5 lamelles ressort 71. Les différents éléments d'amortissement 7 positionnés sur la plaque 6 n'ont par ailleurs pas nécessairement tous le même nombre de lamelles ressort 71 ; la configuration de chaque élément d'amortissement peut être définie afin d'obtenir l'amortissement souhaité.

Chaque lamelle ressort 71 est typiquement fixée à la plaque 6 via une fixation 72 par une de ses extrémités selon sa dimension longitudinale Lo, ou par une portion médiane de ladite lamelle ressort 71, c'est-à-dire une portion centrée sur le milieu de la lamelle ressort 71 selon sa dimension longitudinale Lo. Les lamelles ressort 71 sont typiquement fixées de manière à s'étendre sensiblement de manière parallèle à la face interne de la plaque 6, soit directement au contact de la plaque interne 6, soit espacées d'une distance comprise entre 0 mm et 10 mm par rapport à la face interne de la plaque 6. Dans le cas où l'élément d'amortissement 7 comprend plusieurs lamelles ressort, celles-ci peuvent être superposées au contact les unes des autres, ou positionnées de manière à maintenir un espace entre les différentes lamelles ressort 71, l'espacement étant alors typiquement assuré par la fixation 72.

Sur la figure 1, l'élément d'amortissement 7 présente une lamelle ressort 71 fixée à la plaque 6 par une fixation 72 positionnée à l'extrémité interne de la lamelle ressort 71, l'extrémité interne étant la plus proche de l'axe principal Z-Z.

Sur la figure 2, la plaque 6 présente plusieurs éléments d'amortissement 7 disposés selon deux configuration ; une configuration radiale et une configuration tangentielle, que l'on décrit ci-après.

La plaque 6 est ainsi munie d'éléments d'amortissement radiaux 7R et d'éléments d'amortissement tangentiels 7T.

Les éléments d'amortissement radiaux 7R s'étendent radialement par rapport à l'axe principal Z-Z, c'est-à-dire que leur dimension longitudinale Lo s'étend radialement par rapport à l'axe principal Z-Z. Dans l'exemple illustré, les éléments d'amortissement radiaux 7R sont fixés à la plaque 6 par leur extrémité radiale interne, c'est-à-dire l'extrémité de chaque lamelle ressort 71 la plus proche de l'axe principal Z-Z. Dans l'exemple illustré, les éléments d'amortissement radiaux 7R comprennent chacun deux lamelles ressort 71 superposées. Les deux lamelles ressort 71 de chaque élément d'amortissement radial 7R coïncident au niveau de leur extrémité radiale interne. En revanche, leurs extrémités radiales externes sont décalées dans la mesure où la lamelle ressort externe présente une dimension longitudinale inférieure à celle de la lamelle ressort interne.

Les éléments d'amortissement tangentiels 7T s'étendent de manière tangentielle par rapport à un cercle centré sur l'axe principal Z-Z, c'est-à-dire que leur dimension transversale Lt s'étend radialement par rapport à l'axe principal Z-Z. Les éléments d'amortissement tangentiels 7T tels que représentés comprennent deux lamelles ressort 71 superposées. Les deux lamelles ressort 71 superposées présentent des dimensions longitudinales différentes ; la lamelle ressort externe ayant une dimension longitudinale inférieure à celle de la lamelle ressort interne. Les lamelles ressort 71 superposées sont centrées l'une par rapport à l'autre selon leur dimension longitudinale et selon leur dimension tangentielle. Ainsi, la lamelle ressort interne dépasse de part et d'autre de la lamelle ressort externe selon la dimension longitudinale. Les lamelles ressort 71 des éléments d'amortissement tangentiels 7T sont typiquement fixées à la plaque 6 via des fixations 72 positionnées à une section médiane des lamelles ressort 71 selon leur dimension longitudinale. Plus précisément, les fixations 72 sont typiquement centrées sur le milieu des lamelles ressort selon leur longueur (c'est-à-dire leur dimension maximale).

La plaque 6 telle que représentée sur la figure 2 comprend 4 éléments d'amortissement tangentiels 7T et 4 éléments d'amortissement radiaux 7R. On comprend bien que le nombre et la disposition d'éléments d'amortissement est adaptée en fonction de l'amortissement souhaité, et que l'invention n'est pas limitée au mode de réalisation illustré.

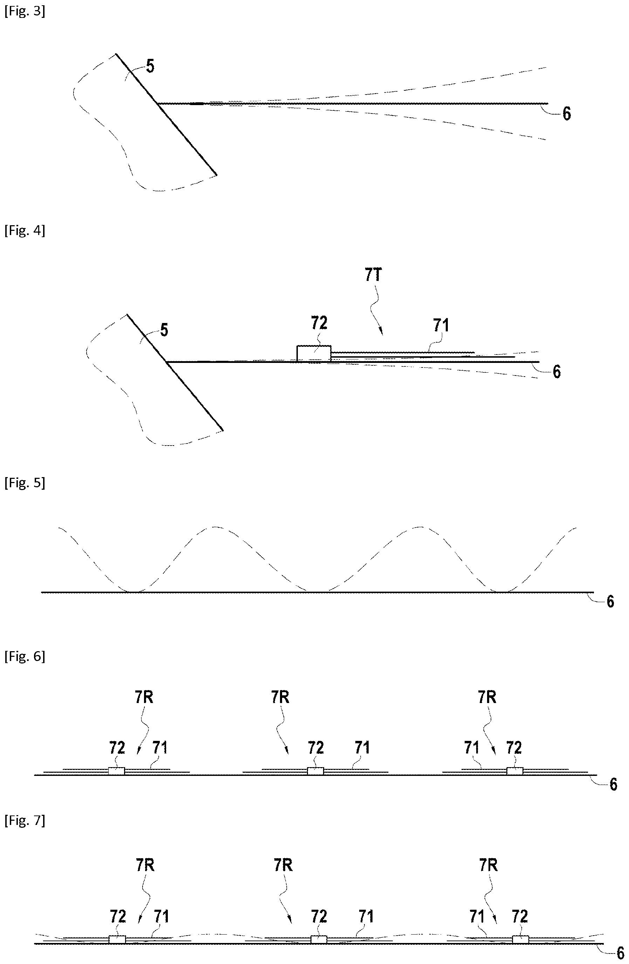

Les figures 3 à 7 illustrent l'effet d'amortissement obtenu à l'aide des éléments d'amortissement 7.

La figure 3 représente schématiquement les mouvements possibles de la plaque 6 pouvant notamment résulter des vibrations du moteur 2 lorsque ce dernier est en fonctionnement. On comprend que l'amplitude des mouvements augmente avec la distance par rapport à la tuyère 5 à laquelle la plaque 6 est fixée.

La figure 4 illustre l'action des éléments d'amortissement 7 sur les mouvements de la plaque 6, en l'espèce un élément d'amortissement radial tel que décrit précédemment.

On voit sur cette figure que l'élément d'amortissement 7 vient amortir les mouvements de la plaque 6 dans une direction uniquement, à savoir les mouvements allant du milieu externe vers le milieu interne. En effet, lorsque la déformation de la plaque 6 l'amène au contact de la lamelle ressort 71 de l'élément d'amortissement 7, la raideur de la lamelle ressort 71 vient s'ajouter à la raideur de la plaque 6 pour amortir le mouvement de la plaque 6. Dans le cas où l'élément d'amortissement 7 comprend plusieurs lamelles ressort 71 superposées, ces dernières vont successivement ajouter localement leur raideur à celle de la plaque 6 pour en amortir les déplacements.

L'élément d'amortissement 7 ne vient pas s'opposer aux mouvements en sens inverse, allant du milieu interne vers le milieu externe. Pour ce type de mouvements, seule la raideur de la plaque 6 intervient. Du fait de cet amortissement non uniforme selon la direction du mouvement de la plaque 6, on qualifie l'amortissement réalisé d'amortissement non linéaire des mouvements de la plaque 6 par les éléments d'amortissement 6.

Un tel amortissement non uniforme est cependant suffisant pour atténuer les vibrations de la plaque 6. L'amortissement des mouvements de la plaque 6 dans une direction uniquement permet notamment d'empêcher l'entretien des modes propres, et va entrainer une réduction de l'amplitude des mouvements de la plaque 6 dans la direction opposée également.

Les figures 5 à 7 illustrent également le fonctionnement des éléments d'amortissement tels que proposés.

La figure 5 schématise les déplacements dans un mode propre de la plaque 6 à sa périphérie externe. Lorsque la plaque 6 est dans un mode propre, on observe un mouvement selon un profil de vibrations du type sinusoïdal, correspondant à la déformation dynamique de la plaque 6 dans sa direction circonférentielle.

La figure 6 représente l'emplacement d'éléments d'amortissement 7 de type tangentiels tels que décrits précédemment.

La figure 7 illustre l'effet de ces éléments d'amortissement tangentiels. On voit sur cette figure que les éléments d'amortissement 7 réduisent fortement l'amplitude des déplacements au niveau des régions dans lesquelles ils sont positionnés. On comprend par ailleurs que le fait de répartir plusieurs éléments d'amortissement 7 sur la face interne de la plaque 6 permet également de limiter l'amplitude des mouvements de la plaque 6 entre deux éléments d'amortissement 7.

L'association d'éléments d'amortissement 7 radiaux et tangentiels permet ainsi de réduire respectivement l'ampleur des déplacements axiaux de la plaque 6 et des déplacements circonférentiels de la plaque 6.

L'emploi de tels éléments d'amortissement 7 est avantageux en ce que ces éléments d'amortissement peuvent être ajoutés à une plaque 6 sans nécessiter de modifications structurelle de la plaque 6. Par ailleurs, de tels éléments d'amortissement présentent une masse relativement faible, et n'ont pas d'impact négatif sur la tenue mécanique de la plaque 6.

## Revendications

1. Lanceur spatial comprenant un corps de lanceur (1), un moteur (2) comprenant une chambre de combustion (4) débouchant sur une tuyère (5) présentant un axe principal (Z-Z), le moteur (2) étant fixé au corps de lanceur au moyen d'un cardan (3), la tuyère (5) étant munie d'une plaque (6) s'étendant radialement autour de la tuyère (5) et isolant un volume interne de l'engin spatial d'un milieu externe,
la plaque (6) délimitant un segment interne du moteur (2) et un segment externe du moteur (2), le segment interne du moteur (2) comprenant la chambre de combustion (4) et étant isolé du milieu externe par la plaque (6),
la plaque (6) présentant une face interne et une face externe positionnées respectivement dans le volume interne et dans le milieu externe,
**caractérisé en ce qu'**il comprend en outre une pluralité d'éléments d'amortissement (7) positionnés sur la face interne de la plaque (6), chaque élément d'amortissement (7) comprenant une lamelle ressort (71) parallèle à la face interne de la plaque (6).

2. Lanceur selon la revendication 1, dans lequel tout ou partie desdits éléments d'amortissement (7) comprend au moins deux lamelles ressort (71) superposées.

3. Lanceur selon la revendication 2, dans lequel pour chaque élément d'amortissement (7) comprenant au moins deux lamelles ressort (71) superposées, lesdites lamelles ressort (71) sont de dimensions distinctes.

4. Lanceur selon l'une des revendications 1 à 3, dans lequel la plaque (6) est munie d'une pluralité d'éléments d'amortissement (7) comprenant chacun une lamelle métallique (71) de forme rectangulaire présentant chacune une dimension longitudinale (Lo) et une dimension transversale (Lt) perpendiculaires, la dimension longitudinale (Lo) étant supérieure à la dimension transversale (Lt), la plaque (6) comprenant un premier ensemble d'éléments d'amortissement (7R) positionnés de manière à ce que leur dimension longitudinale (Lo) s'étende radialement par rapport à l'axe principal (Z-Z) de la tuyère (5), et un second ensemble d'éléments d'amortissement (7T) positionnés de manière à ce que leur dimension transversale (Lt) s'étende radialement par rapport à l'axe principal (Z-Z) de la tuyère (5).

5. Lanceur selon la revendication 4, dans lequel les éléments d'amortissement (7) du premier ensemble d'éléments d'amortissement (7R) sont chacun fixés à la plaque (6) par une extrémité de chaque élément d'amortissement (7) selon la dimension longitudinale (Lo) la plus proche de l'axe principale (Z-Z) de la tuyère (6).

6. Lanceur selon l'une des revendications 4 ou 5, dans lequel les éléments d'amortissement (7) du second ensemble d'éléments d'amortissement (7T) sont chacun fixés à la plaque (6) par une portion médiane de chaque élément d'amortissement (7).

7. Lanceur selon la revendication 6, dans lequel ladite portion médiane est centrée sur le milieu de chaque élément d'amortissement (7) selon sa dimension longitudinale (Lo).

## Patentansprüche

1. Weltraumrakete, umfassend einen Raketenkörper (1), einen Motor (2), der eine Brennkammer (4) umfasst, die sich zu einer Düse (5) mit einer Hauptachse (Z-Z) hin öffnet, wobei der Motor (2) an dem Raketenkörper mittels eines Kardangelenks (3) befestigt ist, wobei die Düse (5) mit einer Platte (6) versehen ist, die sich radial um die Düse (5) erstreckt und ein Innenvolumen des Raumfahrzeugs von einer Außenumgebung isoliert,
wobei die Platte (6) ein Innensegment des Motors (2) und ein Außensegment des Motors (2) begrenzt, wobei das Innensegment des Motors (2) die Brennkammer (4) umfasst und durch die Platte (6) von der Außenumgebung isoliert ist,
wobei die Platte (6) eine Innenfläche und eine Außenfläche aufweist, die jeweils in dem Innenvolumen und in der Außenumgebung positioniert sind,
**dadurch gekennzeichnet, dass** sie ferner mehrere Dämpfungselemente (7) umfasst, die auf der Innenfläche der Platte (6) positioniert sind, wobei jedes Dämpfungselement (7) eine Federzunge (71) umfasst, die parallel zu der Innenfläche der Platte (6) ist.

2. Rakete nach Anspruch 1, wobei alle oder ein Teil der Dämpfungselemente (7) mindestens zwei aufeinandergelegte Federzungen (71) umfasst/en.

3. Rakete nach Anspruch 2, wobei für jedes Dämpfungselement (7), das mindestens zwei aufeinandergelegte Federzungen (71) umfasst, die Federzungen (71) unterschiedliche Abmessungen aufweisen.

4. Rakete nach einem der Ansprüche 1 bis 3, wobei die Platte (6) mit mehreren Dämpfungselementen (7) versehen ist, die jeweils eine rechteckige metallische Zunge (71) umfassen, die jeweils eine Längsabmessung (Lo) und eine Querabmessung (Lt), die senkrecht sind, aufweist, wobei die Längsabmessung (Lo) größer als die Querabmessung (Lt) ist,
wobei die Platte (6) eine erste Gruppe von Dämpfungselementen (7R), die so positioniert sind, dass ihre Längsabmessung (Lo) sich radial in Bezug auf die Hauptachse (Z-Z) der Düse (5) erstreckt, und eine zweite Gruppe von Dämpfungselementen (7T), die so positioniert sind, dass ihre Querabmessung (Lt) sich radial in Bezug auf die Hauptachse (Z-Z) der Düse (5) erstreckt, umfasst.

5. Rakete nach Anspruch 4, wobei die Dämpfungselemente (7) der ersten Gruppe von Dämpfungselementen (7R) jeweils durch ein Ende jedes Dämpfungselements (7) gemäß der Längsabmessung (Lo), die der Hauptachse (Z-Z) der Düse (6) am nächsten ist, an der Platte (6) befestigt sind.

6. Rakete nach einem der Ansprüche 4 oder 5, wobei die Dämpfungselemente (7) der zweiten Gruppe von Dämpfungselementen (7T) jeweils durch einen Mittelteil jedes Dämpfungselements (7) an der Platte (6) befestigt sind.

7. Rakete nach Anspruch 6, wobei der Mittelteil auf die Mitte jedes Dämpfungselements (7) gemäß seiner Längsabmessung (Lo) zentriert ist.

## Claims

1. A space launcher comprising a launcher body (1), an engine (2) comprising a combustion chamber (4) opening out onto a nozzle (5) having a main axis (Z-Z), the engine (2) being fixed to the launcher body by means of a cardan (3), the nozzle (5) being provided with a plate (6) extending radially around the nozzle (5) and isolating a internal volume of the spacecraft from an external medium,
the plate (6) delimiting an inner segment of the engine (2) and an outer segment of the engine (2), the inner segment of the engine (2) comprising the combustion chamber (4) and being isolated from the external medium by the plate (6),
the plate (6) having an inner face and an outer face positioned respectively in the internal volume and in the external medium,
**characterized in that** it further comprises a plurality of damping elements (7) positioned on the inner face of the plate (6), each damping element (7) comprising a leaf spring (71) parallel to the inner face of the plate (6).

2. The launcher according to claim 1, wherein all or part of said damping elements (7) comprises at least two superimposed leaf springs (71).

3. The launcher according to claim 2, wherein for each damping element (7) comprising at least two superimposed leaf springs (71), said leaf springs (71) are of distinct dimensions.

4. The launcher according to any of claims 1 to 3, wherein the plate (6) is provided with a plurality of damping elements (7) each comprising a metal leaf (71) of rectangular shape each presenting a longitudinal dimension (Lo) and a transverse dimension (Lt) perpendicular to each other, the longitudinal dimension (Lo) being greater than the transverse dimension (Lt),
the plate (6) comprising a first set of damping elements (7R) positioned so that their longitudinal dimension (Lo) extends radially with respect to the main axis (Z-Z) of the nozzle (5), and a second set of damping elements (7T) positioned so that their transverse dimension (Lt) extends radially with respect to the main axis (Z-Z) of the nozzle (5).

5. The launcher according to claim 4, wherein the damping elements (7) of the first set of damping elements (7R) are each fixed to the plate (6) by one end of each damping element (7) along the longitudinal dimension (Lo) closest to the main axis (Z-Z) of the nozzle (6).

6. The launcher according to any of claims 4 or 5, wherein the damping elements (7) of the second set of damping elements (7T) are each fixed to the plate (6) by a median portion of each damping element (7).

7. The launcher according to claim 6, wherein said median portion is centered on the middle of each damping element (7) along its longitudinal dimension (Lo).
